Europäisches Patentamt

European Patent Office

Office européen des brevets

(11) Veröffentlichungsnummer: **0 079 474**
**A1**

(12) EUROPÄISCHE PATENTANMELDUNG

(21) Anmeldenummer: 82109668.2

(22) Anmeldetag: 20.10.82

(51) Int. Cl.³: **B 29 D 3/00**
**B 29 D 3/02**

(30) Priorität: 30.10.81 DE 3143044

(43) Veröffentlichungstag der Anmeldung:
25.05.83 Patentblatt 83/21

(84) Benannte Vertragsstaaten:
AT DE FR GB IT

(71) Anmelder: BASF Aktiengesellschaft
Carl-Bosch-Strasse 38
D-6700 Ludwigshafen(DE)

(72) Erfinder: Gehrig, Heinz, Dr.
Spinozastrasse 30
D-6750 Kaiserslautern(DE)

(54) Verfahren zur Herstellung von faserverstärkten und gefüllten Bahnen aus ungesättigten Polyesterharzen.

(57) Verfahren zur Herstellung von Bahnen oder Platten aus ungesättigten Polyesterharzen, die aus faserverstärkten Randschichten und einer hochgefüllten Innenschicht bestehen. Man breitet flüssiges ungesättigtes Polyesterharz (A), welches vorzugsweise mit feinkörnigen Füllstoffen (B) vermischt worden war, flächig aus und bringt in die Harzmasse faserförmiges Verstärkungsmaterial (C) ein. Zwischen zwei harzgetränkten Faserschichten (A,B) wird grobkörniger Füllstoff (D) trocken als einlagige Innenschicht eingebracht und die Schichten zu einer Bahn zusammengeführt, die mittels Kalander (4) kalibriert, gegebenenfalls verformt und schließlich ausgehärtet (5) wird.

Die Bahnen oder Platten können zur Fassadenverkleidung oder Dachdeckung oder als Schalldämmelement verwendet werden.

BASF Aktiengesellschaft

Verfahren zur Herstellung von faserverstärkten und gefüllten Bahnen aus ungesättigen Polyesterharzen

Um die Steifigkeit von Formteilen aus glasfaserverstärkten
Kunststoffen zu erhöhen und um die Einsatzkosten zu verringern, ist man bestrebt, zusätzlich zu den Verstärkungsfasern möglichst viel preisgünstige Füllstoffe in die Harze
einzuarbeiten. Dabei verwendet man zweckmäßigerweise in den
höher beanspruchten Randschichten mehr Verstärkungsfasern,
während die belastungsmäßig neutrale Innenschicht mehr
Füllstoffe enthalten kann. Solche Schichtstoffe werden gewöhnlich so hergestellt, daß man zwischen zwei harzgetränkten Faserschichten eine Schicht aus füllstoffhaltigem
Harz einbringt und die Harze dann aushärtet. Besonders bei
hochgefüllten und damit hochviskosen Harzmassen ist es
schwierig, gleichmäßig dicke Innenschichten aufzubringen.

Der Erfindung lag daher die Aufgabe zugrunde, ein Verfahren
zur Herstellung von faserverstärkten und gefüllten Bahnen
aus ungesättigen Polyesterharzen zu entwickeln, das einfach durchzuführen ist und einen hochen Füllstoffgehalt
ermöglicht.

Diese Aufgabe wird dadurch gelöst, daß man flüssiges ungesättigtes Polyesterharz A, welche gegebenenfalls mit feinkörnigen Füllstoffen B im Gewichtsverhältnis 100 : 0 bis
20 : 80 versetzt wurde, flächig ausbreitet, faserförmiges
Verstärkungsmaterial C in die Harzmasse einbringt, so daß
eine harzgetränkte Faserschicht entsteht, zwischen zwei
derartige Schichten grobkörnigen Füllstoff D trocken einbringt, die Schichten zu einer Bahn zusammenführt, die
Bahn durch Kalander kalibriert, gegebenenfalls verformt und
schließlich aushärtet.

Dd/P

Das Verfahren kann diskontinuierlich oder vorzugsweise kontinuierlich auf Bandanlagen durchgeführt werden. Man kann dabei auch mehrere Bahnen schichtenweise übereinander anordnen. Die Dicke der fertigen Bahnen beträgt vorzugsweise 2 bis 10, insbesondere 2,5 bis 5 mm.

Die erfindungsgemäßen Bahnen enthalten vorzugsweise eine Deckschicht aus gehärtetem ungefülltem und unverstärktem Polyesterharz A'. Diese sogenannte Gelcoatschicht, die im allgemeinen eine Dicke von 0,2 bis 0,5 mm aufweist, verleiht den Bahnen eine gute Witterungsbeständigkeit und bietet eine Möglichkeit zur Einfärbung. Bei der kontinuierlichen Herstellung der Bahnen auf einer Bandanlage wird auf diese zunächst das Polyesterharz A' als dünne Schicht aufgebracht und angehärtet, und darauf werden dann die anderen Schichten ausgebreitet.

Die Polyesterharze A und A' sind übliche Lösungen ungesättigter Polyester in copolymerisierbaren Monomeren, vorzugsweise Styrol. Die Lösungen enthalten gewöhnlich 25 bis 50 Gew.% der Monomeren. Sie enthalten ferner die üblichen Härtungsmittel, z.B. Peroxid-Härter und Cobalt- oder Amin-Beschleuniger oder andere Initiatoren. Das ungesättigte Polyesterharz A hat vorzugsweise eine Viskosität zwischen 20 und 100 mPas.

Das Polyesterharz A wird mit einem feinkörnigen Füllstoff B im Gewichtsverhältnis 100 : 0 bis 20 : 80 versetzt. Die mittlere Teilchengröße der Füllstoffe B liegt zwischen 0,1 und 300, vorzugsweise zwischen 1 und 10 um. Als Füllstoffe B kommen z.B. in Frage: Quarzmehl, Glasmehl, gemahlene Kreide, sowie vorzugsweise Aluminiumoxid $Al_2O_3$. Dieses dient nicht nur als Streckmittel, sondern wirkt auch als Flammschutzmittel für die Kunststoffbahnen.

Die Verstärkungsfasern C werden vorzugsweise in Form von Glasfasermatten oder geschnittenen Glas-Rovings mit einer Faserlänge von 3 bis 60 mm, vorzugsweise 12,5 bis 50 mm und einer Faserdicke von 1 bis 100, vorzugsweise von 5 bis 40 um in das Harz eingebracht. Die Matten bzw. Rovings können mit den üblichen Schlichten und Bindemittel ausgerüstet sein. Auch Endlosglasfasern und Fasergewebe sind verwendbar.

Der grobkörnige Füllstoff D soll eine mittlere Teilchengröße zwischen 0,3 und 4 mm, vorzugsweise zwischen 1,5 und 3 mm aufweisen. Er soll ein verhältnismäßig enges Kornspektrum haben, d.h. das Verhältnis $d_{max} : d_{min}$ soll kleiner als 2,0, vorzugsweise kleiner als 1,5 sein. Die Menge der eingebrachten Füllstoffe soll so bemessen sein, daß die Dicke der Innenschicht etwa so groß ist wie der maximale Korndurchmesser, vorzugsweise etwas kleiner ist.

Bevorzugt werden die einzelnen Bestandteile in folgenden Mengen zusammengegeben:

|  | $kg : m^2$ |
| --- | --- |
| Polyesterharz A' | 0,2 – 0,4 |
| Polyesterharz A | 1 – 2 |
| feinkörniger Füllstoff B | 1 – 4 |
| Verstärkungsfasern C | 0,2 – 0,5 |
| grobkörniger Füllstoff D | 2 – 4 |

Bei dem erfindungsgemäßen Verfahren wird zunächst das Polyesterharz A mit dem feinkörnigen Füllstoff B versetzt, z.B. durch Einrühren oder Kneten. Die Harzmasse wird dann flächig ausgebreitet, z.B. mittels eines Rakels. In diese Harzmasse wird dann das faserförmige Verstärkungsmaterial eingebracht, indem man z.B. Schnittglasfasern gleichmäßig aufstreut oder eine endlose Glasfasermatte zuführt. Als Tränkhilfe kann eventuell ein Drahtrechen benutzt werden, der im Falle der Verwendung von Schnittfasern diese in die Harzschicht hineindrückt, so daß sie von der Harzmasse durchtränkt werden. Auf die entstandene harzgetränkte Faserschicht wird dann der grobkörnige Füllstoff D trocken ausgebracht, z.B. gleichmäßig als einlagige Schicht aufgestreut. Eine weitere harzgetränkte Faserschicht wird darauf aufgelegt oder es werden zwei Schichten zusammengeführt und der Füllstoff D dazwischen eingebracht. Die Schichten werden dann zu einer Bahn zusammengeführt, diese Bahn wird dann mittels Kalander kalibriert, wobei die Luft aus den Zwischenräumen mehr oder weniger verdrängt wird, so daß Harz zwischen die Körner eindringen kann. Wenn die Luft nicht vollständig entfernt ist, enthalten die fertigen Bahnen Luftbläschen, die ein Nageln der Bahnen ermöglichen. Durch Variation der Kalanderspaltweite kann die Dichte und die Dicke der Bahnen eingestellt werden. Die Bahnen können vor dem Aushärten gegebenenfalls verformt werden, so daß gekrümmte oder gewellte Formteile erzeugt werden können. Die Kalanderwalzen können in ihrer Oberfläche strukturiert sein, so daß reliefartige, geprägte Bahnen sich herstellen lassen. Die Bahnen werden schließlich durch Aushärten verfestigt. Dies kann durch Erhitzen in einem Heiztunnel oder - im Falle der Verwendung von Lichtinitiatoren - durch Bestrahlen geschehen.

Hauptvorteil bei der Anwendung des erfindungsgemäßen Verfahrens ist die gute Handhabbarkeit der zunächst nur mit feinkörnigen Füllstoffen versetzten Harzmasse, da wegen der erst später trocken beigegebenen grobkörnigen Hauptfüllstoffmenge in den vorhergehenden Arbeitsschritten eine relativ niedrige Viskosität vorliegt, die gutes Tränkverhalten ergibt.

Hauptvorteil für die hergestellten Artikel ist neben ihrer problemlosen und kostengünstigen Herstellungsweise vor allem das ansprechende Aussehen und die gute Qualität trotz eines niedrigen Harz-Anteils in der Zwischenschicht.

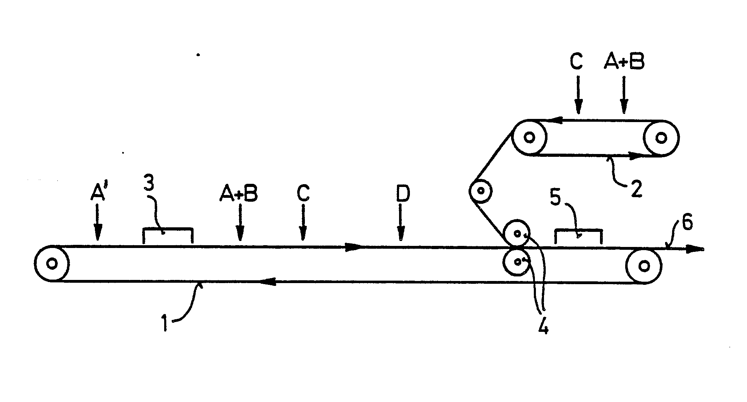

In der Zeichnung ist eine bevorzugte Ausführungsform der Erfindung schematisch dargestellt:

Auf ein folienbelegtes Transportband 1 wird zunächst das ungefüllte und unverstärkte Polyesterharz A' aufgebracht und durch die Härtungsvorrichtung 3 zu einer Gelcoatschicht ausgehärtet. Dann werden Polyesterharz A, welches mit Füllstoffe B vorvermischt war, und Verstärkungsfasern C aufgebracht. Auf die entstandene harzgeträkte Faserschicht wird der grobkörnige Füllstoff D aufgestreut. Gleichzeitig wird auf einem ebenfalls folienbelegten Transportband 2 ebenfalls eine zweite harzgetränkte Faserschicht erzeugt. Die Schichten werden zusammengeführt, durch Kalander 4 kalibriert und durch eine Härtungsvorrichtung 5 zu der fertigen Bahn 6 ausgehärtet.

Nach dem erfindungsgemäßen Verfahren lassen sich glatte, profilierte oder gewellte Bahnen und Platten herstellen. Hauptanwendungsgebiete sind Dachdeckung und Fassadenverkleidung, wobei es besonders vorteilhaft ist, daß man bereits bei der Herstellung der Platten sowohl geometrisch als auch farblich (durch die Gelcoatschicht) für ein gutes Aussehen sorgen kann. Eine weitere Anwendung ist auf dem Gebiet der Schalldämmelemente zu sehen, wobei die einfache Möglichkeit zur Profilierung und die relative hohe Dichte vorteilhaft sind.

**0079474**

*Beispiel*

Auf ein Transportband, auf dem eine 50 /um dicke Polyesterfolie aufliegt, werden 0,25 kg/m$^2$ einer Polyesterharz--Lösung in Styrol, die Härter und Beschleuniger enthält, aufgesprüht und zu einer 250 /um dicken Gelcoatschicht ausgehärtet. Darauf wird eine Harzschicht aufgerakelt. Diese besteht aus 0,7 kg/m$^2$ einer Peroxid-Härter und Cobalt-Beschleuniger enthaltenden 35 %igen Lösung eines ungesättigten Polyesters aus Maleinsäure, Orthophthalsäure und Standardglykolen (Viskosität bei 23$^\circ$C, 250 mPas), die mit 1,4 kg/m$^2$ Aluminiumoxid-Füllstoff einer mittleren Korngröße von 7 /um vorgemischt war. Auf diese Harzmasse wurde eine endlose Glasfasermatte (Glasfaserdicke 17 /um, Länge der Einzelfasern 50 mm) mit einem Flächengewicht von 0,15 kg/m$^2$ aufgebracht und mit der Harzmasse getränkt. Aus einem Vorlagetrichter wurden auf die Harzschicht 2,8 kg/m$^2$ Sand der Körnung 2 mm bis 2,5 mm gleichmäßig aufgestreut. Auf einem zweiten Transportband wird gleichzeitig eine gleiche harzgetränkte Faserschicht, jedoch ohne Gelcoat und Grobfüllstoff, hergestellt. Die beiden Schichten werden zusammengeführt und mittels Kalander kalibriert. Die entstandene Bahn wird im Heiztunnel bei 80$^\circ$C ausgehärtet. Sie zeigt folgende Eigenschaften:

| | |
|---|---|
| Dicke | 3,7 mm |
| Dichte | 1,9 g $\cdot$ cm$^{-3}$ |
| Flächengewicht | 7,0 kg $\cdot$ m$^{-2}$ |
| Zugfestigkeit | 15,6 N $\cdot$ mm$^{-2}$ |
| Biegefestigkeit | 46,0 N $\cdot$ mm$^{-2}$ |

## Patentansprüche

1. Verfahren zur Herstellung von faserverstärkten und gefüllten Bahnen aus ungesättigten Polyesterharzen, die aus faserverstärkten Randschichten und einer hochgefüllten Innenschicht bestehen, dadurch gekennzeichnet, daß man flüssiges ungesättigtes Polyesterharz A, das gegebenenfalls mit feinkörnigen Füllstoffen B im Gewichtsverhältnis 100 : 0 bis 20 : 80 versetzt wurde, flächig ausbreitet, faserförmiges Verstärkungsmaterial C in die Harzmasse einbringt, so daß eine harzgetränkte Faserschicht entsteht, zwischen zwei derartige Schichten grobkörnigen Füllstoff D trocken einbringt, die Schichten zu einer Bahn zusammenführt, die Bahn durch Kalander kalibriert, gegebenenfalls verformt und schließlich aushärtet.

2. Verfahren nach Anspruch 1, dadurch gekennzeichnet, daß man auf eine oder beide Randschichten eine Deckschicht aus ungefülltem und unverstärktem ungesättigtem Polyesterharz A' aufbringt und dieses aushärtet.

3. Verfahren nach Anspruch 1, dadurch gekennzeichnet, daß das ungesättigte Polyesterharz A eine Viskosität zwischen 20 und 1000 mPas hat.

4. Verfahren nach Anspruch 1, dadurch gekennzeichnet, daß der feinkörnige Füllstoff B eine mittlere Teilchengröße zwischen 0,1 und 300, vorzugsweise zwischen 1 und 10 $\mu$m hat.

5. Verfahren nach Anspruch 1, __dadurch gekennzeichnet__, daß das faserförmige Verstärkungsmaterial C Glasfasermatten oder Schnittglasfasern einer Länge von 3 bis 60 mm sind.

6. Verfahren nach Anspruch 1, __dadurch gekennzeichnet__, daß der grobkörnige Füllstoff D eine mittlere Teilchengröße zwischen 0,3 und 4 mm hat.

7. Verfahren nach Anspruch 1, __dadurch gekennzeichnet__, daß der feinkörnige Füllstoff $Al_2O_3$ und der grobkörnige Füllstoff Sand ist.

8. Verfahren nach Anspruch 1, __dadurch gekennzeichnet__, daß die einzelnen Bestandteile in folgenden Mengenbereichen zusammengegeben werden:

| | |
|---|---|
| ungesättigtes Polyesterharz A' | 0,2 – 0,4 $kg/m^2$ |
| ungesättigtes Polyesterharz A | 1 – 2 $kg/m^2$ |
| feinkörniger Füllstoff B | 1 – 4 $kg/m^2$ |
| Verstärkungsfasern C | 0,2 – 0,5 $kg/m^2$ |
| grobkörniger Füllstoff D | 2 – 4 $kg/m^2$ |

Zeichn.

/\/\/

A'  3  A+B  C  D  C  A+B  5  6  2

C  A+B

1  4

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| X | DE-A-1 965 006 (AKTIEBOLAGET IFÖVERKEN) * Gesamtes Dokument * | 1,7 | B 29 D 3/00 B 29 D 3/02 |
| X | GB-A-1 006 294 (SHAWELL SAND AND GRAVEL CO., LTD.) * Ansprüche 1, 7, 9, 10; Figuren 1-5 * | 1,5,7 | |
| Y | GB-A- 892 778 (BAKELITE LTD.) * Ansprüche 1,5,6,8 * | 1,5,7 | |
| Y | BE-A- 686 764 (STRATINOR S.A.) * Gesamtes Dokument * | 1,5,7 | |
| Y | DE-A-3 004 905 (F. WILSER) * Gesamte Seite 6 * | 7 | **RECHERCHIERTE SACHGEBIETE (Int. Cl. ³)** |
| A | GB-A-2 029 319 (SWISS ALUMINIUM LTD.) | | B 29 C 23/00 B 29 D 3/00 B 29 D 9/00 B 32 B 17/00 B 32 B 19/00 |
| A | US-A-3 145 502 (D. RUBENSTEIN) | | |
| A | US-A-3 328 231 (J.A. SERGOVIC) | | |

Der vorliegende Recherchenbericht wurde für alle Patentansprüche erstellt.

| Recherchenort BERLIN | Abschlußdatum der Recherche 21-01-1983 | Prüfer FINDELI B.F.C |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82